(19) Europäisches Patentamt
European Patent Office
Office européen des brevets

(11) **EP 2 351 205 B1**

(12) **FASCICULE DE BREVET EUROPEEN**

(45) Date de publication et mention
de la délivrance du brevet:
**05.09.2012  Bulletin 2012/36**

(21) Numéro de dépôt: **09756032.0**

(22) Date de dépôt: **15.10.2009**

(51) Int Cl.:
*H02P 9/02* *(2006.01)*          *H02P 9/14* *(2006.01)*
*H02P 9/48* *(2006.01)*          *H02J 7/14* *(2006.01)*
*H02J 7/24* *(2006.01)*          *H02P 6/00* *(2006.01)*

(86) Numéro de dépôt international:
**PCT/FR2009/051967**

(87) Numéro de publication internationale:
**WO 2010/049618 (06.05.2010 Gazette 2010/18)**

(54) **REGULATEUR DE TENSION D'ALTERNATEUR EQUIPE D'UNE INTERFACE PROGRAMMABLE DE TRAITEMENT DE SIGNAL**

GENERATOR-SPANNUNGSREGLER MIT PROGRAMMIERBARER SIGNALVERARBEITUNGSSCHNITTSTELLE

ALTERNATOR VOLTAGE REGULATOR WITH A PROGRAMMABLE SIGNAL PROCESSING INTERFACE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **30.10.2008  FR 0857396**

(43) Date de publication de la demande:
**03.08.2011  Bulletin 2011/31**

(73) Titulaire: **Valeo Equipements Electriques Moteur 94046 Créteil Cedex (FR)**

(72) Inventeurs:
• **CHASSARD, Pierre**
**F-94000 Creteil (FR)**
• **TISSERAND, Pierre**
**F-94450 Limeil Brevannes (FR)**
• **GENDRON, Vincent**
**F-94100 Saint Maur des Fosses (FR)**
• **HAZARD, Philippe**
**F-94000 Creteil (FR)**

(56) Documents cités:
EP-A- 1 193 825          DE-A1-102004 037 259
FR-A- 2 854 715          US-A1- 2007 085 510
US-A1- 2008 084 190      US-B1- 6 555 930

**Description**

DOMAINE TECHNIQUE DE L'INVENTION

La présente invention est applicable de manière générale dans le domaine automobile. Plus particulièrement, l'invention concerne un régulateur de tension perfectionné prévu pour équiper des alternateurs de véhicules automobiles.

ARRIERE-PLAN TECHNOLOGIQUE DE L'INVENTION

Dans les alternateurs actuels, il est très souvent prévu une liaison de communication entre un régulateur de tension inclus l'alternateur et une unité de commande électronique du véhicule.

A ce propos, il est connu par US2008/0084190A1 un procédé pour communiquer une information de commutation d'un régulateur de tension à une unité électronique de commande d'un véhicule automobile. Selon ce procédé, un régulateur de tension génère un premier signal de sortie qui est configuré pour réguler le courant d'excitation d'un alternateur. Un second signal de sortie est délivré par le régulateur de tension et est fourni à l'unité électronique de commande du véhicule, ce second signal de sortie étant représentatif de l'état du premier signal de sortie. Le second signal de sortie représente une valeur moyenne du premier signal de sortie. Un filtrage de valeurs transitoires est ainsi réalisé.

Dans l'état de la technique, unité de commande électronique est fréquemment l'unité dite de contrôle moteur qui est dédiée à la commande et à la gestion de la motorisation thermique du véhicule automobile, mais qui peut assurer aussi la commande et la surveillance de l'alternateur.

A travers cette liaison de communication, l'unité de commande électronique peut dialoguer avec le régulateur de l'alternateur et commander un mode de fonctionnement particulier de celui-ci. Ainsi, il est possible à l'unité de commande électronique de fournir au régulateur des instructions telles qu'une consigne de tension et de recevoir en retour une information relative au fonctionnement effectif de l'alternateur.

L'information transmise en retour à l'unité de commande électronique par le régulateur est bien souvent une information relative à un courant d'excitation de l'alternateur. Cette information permet à l'unité de commande électronique de vérifier l'état de fonctionnement de l'alternateur par rapport aux instructions fournies et éventuellement d'ajuster ces instructions, réalisant une boucle de régulation supplémentaire qui s'ajoute à celle réalisée en local par le régulateur lui-même.

Selon les constructeurs automobiles, les signaux représentatifs de l'information relative à un courant d'excitation de l'alternateur demandée en retour sont différents. En effet, certains constructeurs demandent à l'équipementier de concevoir un régulateur capable de fournir à l'unité de commande électronique un signal modulé en largeur d'impulsion (PWM) présent en sortie d'un modulateur PWM inclus dans le régulateur. D'autres constructeurs préfèrent disposer d'un signal directement représentatif du signal présent sur la grille d'un transistor MOS-FET de puissance présent dans le régulateur et alimentant en courant commuté la bobine d'excitation de l'alternateur, et d'autres encore préfèrent que l'unité de commande électronique reçoive un signal représentant directement la tension d'excitation aux bornes de la bobine d'excitation de l'alternateur.

Une telle situation a pour conséquence de rendre la tâche de l'équipementier plus difficile et d'augmenter les coûts, car celui-ci doit en permanence adapter et modifier ses circuits afin de répondre à des besoins clients différents.

DESCRIPTION GENERALE DE L'INVENTION

La présente invention a principalement pour objet de fournir un régulateur de tension pour alternateur de véhicule automobile ne présentant pas les inconvénients indiqués ci-dessus.

Un régulateur selon la présente invention comprend des circuits électroniques de régulation aptes à produire un courant d'excitation destiné à une bobine d'excitation de l'alternateur, ledit courant d'excitation étant produit en fonction d'une différence entre une tension de consigne et une tension de sortie mesurée aux bornes d'une batterie électrique du véhicule à laquelle est raccordé électriquement l'alternateur, et des moyens pour produire un signal représentatif du courant d'excitation et transmettre celui-ci à une unité de commande électronique du véhicule.

Conformément à l'invention, les moyens pour produire et transmettre comprennent une interface programmable de traitement de signal recevant en entrée une pluralité de signaux représentatifs du courant d'excitation, l'interface comportant des premiers moyens pour sélectionner un signal représentatif dans la pluralité de signaux représentatifs, des moyens pour appliquer différents traitements sur le signal représentatif sélectionné et des seconds moyens pour sélectionner un traitement à appliquer audit signal représentatif sélectionné, le signal représentatif sélectionné et le traitement à appliquer étant sélectionnés en fonction d'un mot de programmation.

Selon une forme de réalisation préférée de l'invention, le signal représentatif du courant d'excitation est un signal de type à modulation de largeur d'impulsion dit « PWM ».

Selon d'autres caractéristiques particulières de l'invention, les moyens pour appliquer différents traitements peuvent comporter :

- des moyens pour effectuer un traitement de limitation d'un rapport cyclique du signal représentatif traité et n'autoriser une variation du rapport cyclique qu'entre une valeur minimum prédéterminée et une valeur maximum prédéterminée ;
- des moyens pour effectuer un traitement de calcul de moyenne glissante sur le signal représentatif traité ;
- des moyens pour effectuer un traitement de filtrage passe-bas sur le signal représentatif traité ; et/ou
- des moyens pour effectuer un traitement de changement de fréquence sur le signal représentatif traité.

Selon une autre caractéristique de l'invention, l'interface est de type numérique et comporte un convertisseur analogique-numérique de rapport cyclique et un convertisseur numérique-analogique de rapport cyclique pour les conversions correspondantes du signal représentatif.

Selon d'autres aspects, l'invention concerne aussi un alternateur pour véhicule automobile comprenant un régulateur tel que décrit brièvement ci-dessus et un véhicule automobile intégrant un tel alternateur.

D'autres avantages et caractéristiques de la présente invention apparaîtront plus clairement à la lecture de la description ci-dessous de plusieurs formes de réalisation particulières en référence aux dessins annexés.

BREVE DESCRIPTION DES DESSINS

La Fig.1 est un bloc-diagramme général d'un alternateur pour véhicule automobile incluant un régulateur de tension équipé d'une interface programmable de traitement de signal selon une forme de réalisation particulière de l'invention ;

la Fig.2 est une courbe montrant une fonction de limitation de rapport cyclique implémentée dans l'interface programmable de traitement de signal de la Fig.1 ;

la Fig.3 montre un exemple de réalisation d'un circuit de moyenne inclus dans l'interface de la Fig.1 ;

les Figs.4a et 4b montrent les réponses spectrales de deux formes de réalisation particulières du circuit de moyenne inclus dans l'interface de la Fig.1 ; et

les Figs.6a à 6d montrent les réponses spectrales de quatre formes de réalisation particulières de circuits de filtrage passe-bas inclus dans l'interface de la Fig.1.

DESCRIPTION DE FORMES DE REALISATION PARTICULIERES DE L'INVENTION

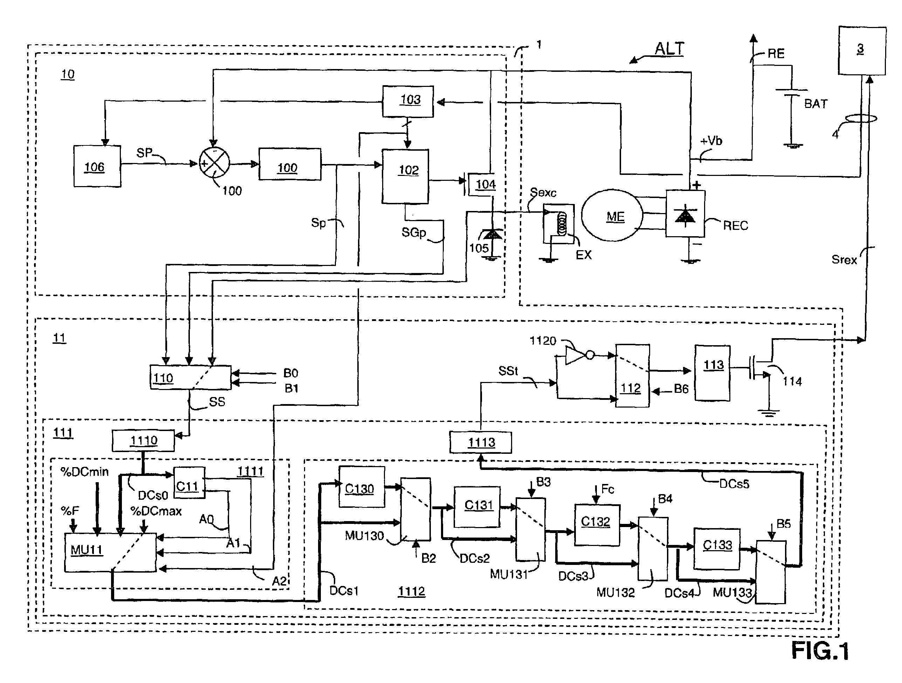

En référence à la Fig.1, il est maintenant décrit un alternateur ALT comprenant une machine électrique tournante ME, un pont de redressement REC et un régulateur de tension 1.

La machine ME est par exemple de type triphasé et comporte des bobinages statoriques de phase reliés à des branches correspondantes (non représentées) du pont de redressement REC.

Le pont de redressement REC fournit une tension +Vb qui alimente un réseau électrique de bord RE du véhicule et qui maintient chargée une batterie électrique BAT associée au réseau RE.

Comme montré schématiquement à la Fig.1, la machine électrique ME comprend une bobine d'excitation EX logée dans un rotor (non représenté) de la machine électrique ME.

De manière connue, la tension de sortie +Vb est réglée en intervenant sur l'intensité moyenne d'un courant d'excitation circulant dans la bobine d'excitation EX.

Une forme de réalisation particulière du régulateur de tension 1 pour alternateur selon l'invention est représentée à la Fig.1.

Comme montré à la Fig.1, le régulateur 1 comprend un circuit électronique de régulation 10 et une interface programmable de traitement de signal 11.

Le circuit électronique de régulation 10 comprend essentiellement un soustracteur de calcul d'erreur 100, un modulateur de largeur d'impulsion 101 dit PWM (pour « Pulse Width Modulation » en anglais), un circuit de commande d'excitation 102, une machine d'état 103 et un étage de puissance comportant un transistor MOS-FET 104 et une diode de roue libre 105.

Le soustracteur 100 calcule, de manière classique, une erreur entre une consigne de tension SP 106 et la tension mesurée +Vb au niveau d'une borne de tension positive + de l'alternateur, borne de sortie de tension qui est connectée à la batterie électrique BAT du réseau électrique de bord RE du véhicule.

La consigne de tension SP est généralement fournie par l'unité de contrôle moteur 3 au régulateur 1. Une liaison de communication bidirectionnelle 4 entre le régulateur 1 et l'unité de contrôle moteur 3 autorise des échanges d'information entre ces deux éléments 1 et 3.

L'erreur calculée par le soustracteur 100 est fournie en entrée au modulateur PWM 101.

Le modulateur PWM 101 délivre un signal Sp modulé en largeur d'impulsion et dont le rapport cyclique est représentatif de l'erreur calculée par le soustracteur 100. Le signal Sp est fourni en entrée au circuit de commande d'excitation 102.

Le circuit de commande d'excitation 102 est piloté par la machine d'état 103 dans laquelle est implémentée la logique régissant le fonctionnement du régulateur 1. Ce type de circuit est connu par l'homme du métier est ne sera pas décrit ici dans le détail. De manière classique, il peut comprendre un multiplexeur pour sélectionner selon le mode de fonctionnement un signal adapté pour la commande du transistor MOS-FET 104. De plus, des circuits d'attaque dits « driver », tels que pompe de charge et autres, sont généralement nécessaires dans le circuit 102 de manière à produire un signal apte à attaquer l'électrode de grille du transistor 104.

Comme montré à la Fig.1, le circuit de commande d'excitation 102 comporte deux sorties de signal. Une première sortie attaque la grille du transistor 104. Une seconde sortie délivre un signal image de commande de grille SGp qui est directement représentatif du signal présent sur la grille du transistor 104 mais ayant des niveaux adaptés pour une fourniture à l'interface de traitement de signal 11. Dans le mode normal de régulation, le signal image de commande de grille SGp est en modulation PWM et correspond correspondant au signal appliqué sur la grille du MOS-FET 104.

De manière classique, la machine d'état 103 prend en compte des informations obtenues localement (par exemple, la température de la machine électrique ME) et des informations et instructions externes fournies par l'unité de contrôle moteur 3 et détermine un mode de fonctionnement adapté à la situation.

Le circuit de commande d'excitation 102 implémente le mode de fonctionnement commandé par la machine d'état 103, par exemple en limitant le rapport cyclique dans le cas d'une élévation anormale de la température dans la machine électrique ME.

L'étage de puissance, comportant le transistor MOS-FET 104 et la diode de roue libre 105, est représenté schématiquement à la Fig.1.

Dans cet exemple particulier de réalisation avec un transistor MOS-FET de type P et un montage de type dit «high side», une électrode de source du transistor 104 est reliée à la tension +Vb et une électrode de drain de celui-ci est reliée conjointement à une cathode de la diode de roue libre 105 et à une extrémité de la bobine d'excitation EX. Une anode de la diode de roue libre 105 est reliée à la masse conjointement avec l'autre extrémité de la bobine d'excitation EX.

Un signal dit d'excitation Sexc est produit au niveau du point de connexion entre le drain du transistor 104, la cathode de la diode de roue libre 105 et l'extrémité correspondante reliée de la bobine EX.

Comme montré à la Fig.1, les signaux Sp, SGp et Sexc sont fournis en entrée à l'interface programmable de traitement de signal 11.

Comme montré également à la Fig.1, l'interface programmable de traitement de signal 11 comprend essentiellement un circuit de sélection d'entrée 110, un circuit de traitement de signal 111, un circuit de sélection de sortie 112, un circuit d'attaque 113 et un transistor 114.

Le transistor 114 est monté en collecteur ouvert ou drain ouvert et délivre en sortie un signal de retour d'excitation Srex qui est transmis à l'unité de contrôle moteur 3 à travers la liaison de communication 4.

Le circuit de sélection d'entrée 110 est un multiplexeur à 3 entrées et 1 sortie. Les entrées du circuit de sélection d'entrée 110 reçoivent respectivement les signaux Sp, SGp et Sexc. Le circuit 110 délivre en sortie un signal SS qui correspond au signal sélectionné parmi les signaux Sp, SGp et Sexc.

Des bits B0 et B1 d'un mot de programmation MP=«B0B1B2B3B4B5B6» sont appliqués à des entrées de sélection du circuit 110 et déterminent par leurs états le signal sélectionné SS=Sp, SS=SGp ou SS=Sexc présent en sortie du circuit 110. Le mot de programmation MP est mémorisé dans l'interface 11 et autorise une configuration de celle-ci en accord avec l'application concernée.

Le tableau ci-dessous indique un exemple de sélection effectuée à partir des bits B0, B1 :

| B0 | B1 | Signal sélectionné SS |
|----|----|----|
| 0 | 0 | Signal Sp |
| 0 | 1 | Signal SGp |
| 1 | 0 | Signal Sexc |
| 1 | 1 | Combinaison réservée |

Le circuit de traitement de signal 111 comprend un convertisseur analogique-numérique de rapport cyclique 1110, un circuit de limitation de rapport cyclique 1111, des circuits de moyenne, filtrage et décimation 1112 et un convertisseur numérique-analogique de rapport cyclique 1113.

Le convertisseur analogique-numérique de rapport cyclique 1110 convertit le signal analogique SS délivré par le circuit de sélection d'entrée 110 en un signal numérique DCs0 formé d'une succession de mots binaires représentant les valeurs dans le temps du rapport cyclique du signal SS. Le signal numérique DCs0 est destiné à être traité par les circuits numériques en aval.

Le circuit de limitation de rapport cyclique 1111 comporte un comparateur C11 et un multiplexeur MU11.

Le comparateur C11 reçoit en entrée le signal numérique DCs0 et effectue une double comparaison du rapport cyclique de celui-ci à une valeur minimum de référence %MinRef et une valeur maximum de référence %MaxRef.

Des première et seconde sorties du comparateur C11 délivrent des bits A0 et A1 dont l'état binaire représente respectivement les résultats de comparaison :

A0= « 1 » => DCs0 > %MinRef
A1= « 1 » => DCs0 > %MaxRef

Les résultats de comparaison ci-dessus sont utilisés par le circuit de limitation de rapport cyclique 1111 dans un premier mode de fonctionnement qui est le mode de fonctionnement normal de l'alternateur ALT. Dans ce premier mode, les valeurs %MinRef et %MaxRef définissent une fenêtre de valeurs qui est celle qui intéresse l'unité de contrôle moteur 3. Par ailleurs, ces limitations basse et haute, %MinRef et %MaxRef, du rapport cyclique du signal présentent l'avantage de maintenir un signal présentant une activité sur la voie retour de la liaison de communication 4 (dans le sens vers l'unité de contrôle moteur 3), évitant ainsi le cas de figure d'un signal qui n'évolue pas avec un rapport cyclique à 0 ou à 100%. On notera ici que cette activité du signal autorise une détection par l'unité 3 de la bonne continuité de la liaison et du fait que celle-ci est effectivement opérationnelle.

Comme montré à la Fig.1, le multiplexeur MU11 comprend 4 ports d'entrée de données et 1 port de sortie de données, ainsi que 3 entrées de sélection recevant respectivement les bits A0, A1 et un bit A2.

Les 4 ports d'entrée de données du multiplexeur MU11 reçoivent respectivement le signal numérique DCs0 et des valeurs numériques prédéterminées %DCmin, %DCmax et %F.

La sortie de données du MU11 est repérée DCs1 et devient égale à l'une des 4 entrées présentent sur les ports d'entrée de données, en fonction des états des entrées de sélection A0, A1 et A2.

Comme déjà indiqué ci-dessus, les états des bits A0 et A1 sont déterminés par les comparaisons effectuées dans le circuit C11. Le bit A2 est un bit de sélection de mode dont l'état binaire « 0 » ou « 1 » est déterminé par la machine d'état 103. Le tableau ci-dessous précise la sortie DCs1 en fonction des états des bits A0 à A2.

| Comparaisons C11 | A0 | A1 | A2 | DCs1 |
|---|---|---|---|---|
| DCs0<%MinRef | 0 | 0 | 0 | %DCmin |
| %MinRef<DCs0<%MaxRef | 1 | 0 | 0 | DCs0 |
| DCs0>%MaxRef | 1 | 1 | 0 | %DCmax |
| | x | x | 1 | %F |

La lettre « x » dans le tableau indique un état « indifférent» pour les bits concernés.

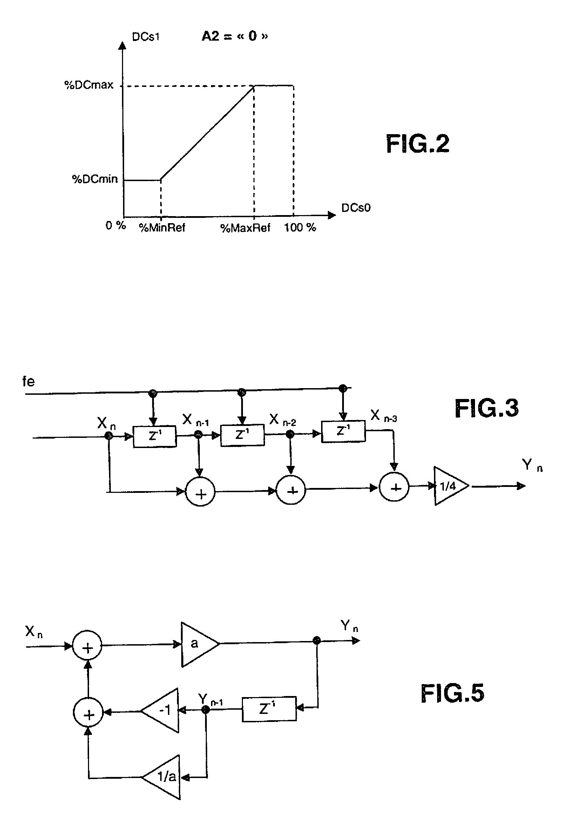

La fonction réalisée par le circuit 1111 dans le premier mode de fonctionnement (A2= « 0 ») est illustrée par la courbe à la Fig.2.

De manière générale, et dans cette forme de réalisation particulière, les valeurs limites %DCmin et %DCmax sont respectivement égales à %MinRef et %MaxRef afin de fournir à l'unité de contrôle moteur 3 un signal de retour d'excitation qui soit l'image de la réalité entre les valeurs limites %MinRef=%DCmin et %MaxRef=%DCmax. Cependant, il n'est pas exclu que les valeurs %MinRef, %MaxRef et %DCmin, %DCmax diffèrent, par exemple, par un coefficient de proportionnalité, dans certaines applications de l'invention.

Le bit A2= «0» sélectionne le premier mode de fonctionnement qui est plus particulièrement décrit ici.

Le bit A2 = «1 » sélectionne un second mode de fonctionnement qui est déterminé par la machine d'état 103. Ce second mode de fonctionnement est sélectionné par exemple lorsqu'une instruction ou information correspondante est reçue en provenance de l'unité de contrôle moteur 3.

Ce second mode de fonctionnement peut correspondre à une phase de fonctionnement particulière du véhicule comme, par exemple, une phase dans laquelle l'unité de contrôle moteur 3 commande une désactivation de l'alternateur ALT pour éviter le prélèvement d'un couple mécanique sur l'arbre du moteur thermique. Dans un tel cas, le protocole de communication convenu entre l'unité de contrôle moteur 3 et le régulateur 1 peut prévoir l'envoi par le régulateur 1 d'une valeur déterminée de confirmation à l'unité de contrôle moteur 3, de manière à indiquer à l'unité 3 que son instruction relative à ce second mode de fonctionnement à bien été prise en compte. Cette valeur déterminée de confirmation est représentée à la Fig.1 par la valeur %F.

Bien entendu, l'invention ne se limite pas ce seul second mode de fonctionnement décrit ci-dessus, mais peut comprendre différents autres seconds modes de fonctionnement qui seront alors sélectionnés par plusieurs bits de type A2 auxquels peuvent correspondre la transmission de différentes autres valeurs déterminées de confirmation de type %F.

Comme montré à la Fig.1, le signal numérique DCs1 délivré par le circuit de limitation de rapport cyclique 1111 est fourni en entrée aux circuits de moyenne, filtrage et décimation 1112.

Les circuits 1112 ont pour fonction d'effectuer un traitement du signal DCs1 par moyennage, filtrage et/ou décimation. La nature exacte du traitement effectué est déterminé par les états respectifs des bits B2 à B5 du mot de programmation MP=«B0B1 B2B3B4B5B6 ».

Les circuits 1112 comprennent essentiellement un circuit de moyenne C130, un premier circuit de filtrage passe-bas C131, un circuit de décimation C132, un second circuit de filtrage passe-bas C133 ainsi que des multiplexeurs MU130, MU131, MU132 et MU133 de type à 2 ports d'entrée de données et 1 port de sortie de données.

Les multiplexeurs MU130, MU131, MU132 et MU133 reçoivent respectivement les bits de programmation B2, B3, B4 et B5 à des entrées de sélection correspondantes.

Le signal DCs1 est appliqué à un port d'entrée de données du circuit de moyenne C130 et à un premier port d'entrée de données du multiplexeur MU130. Un second port d'entrée de données du multiplexeur MU130 reçoit en entrée le signal DCs1.

Le multiplexeur MU130 délivre par son port de sortie de données un signal numérique DCs2. En fonction de l'état du bit de programmation B2, le multiplexeur MU130 délivre par son port de sortie de données soit un signal DCs2 qui correspond au signal DCs1 tel que délivré par MU11, soit un signal DCs2 qui correspond au signal DCs1 après traitement par le circuit de moyenne C130.

Le signal DCs2 est appliqué à un port d'entrée de données du premier circuit de filtrage passe-bas C131 et à un premier port d'entrée de données du multiplexeur MU131. Un second port d'entrée de données du multiplexeur MU131 reçoit en entrée le signal DCs2.

Le multiplexeur MU131 délivre par son port de sortie de données un signal numérique DCs3. En fonction de l'état du bit de programmation B3, le multiplexeur MU131 délivre par son port de sortie de données soit un signal DCs3 qui correspond au signal DCs2, soit un signal DCs3 qui correspond au signal DCs2 après traitement par le premier circuit de filtrage passe-bas C131.

Le signal DCs3 est appliqué à un port d'entrée de données du circuit de décimation C132 et à un premier port d'entrée de données du multiplexeur MU132. Un second port d'entrée de données du multiplexeur MU132 reçoit en entrée le signal DCs3.

Le multiplexeur MU132 délivre par son port de sortie de données un signal numérique DCs4. En fonction de l'état du bit de programmation B4, le multiplexeur MU132 délivre par son port de sortie de données soit un signal DCs4 qui correspond au signal DCs3, soit un signal DCs4 qui correspond au signal DCs3 après traitement par le circuit de décimation C132.

Le signal DCs4 est appliqué à un port d'entrée de données du second circuit de filtrage passe-bas C133 et à un premier port d'entrée de données du multiplexeur MU133. Un second port d'entrée de données du multiplexeur MU133 reçoit en entrée le signal DCs4.

Le multiplexeur MU133 délivre par son port de sortie de données un signal numérique DCs5. En fonction de l'état du bit de programmation B5, le multiplexeur MU133 délivre par son port de sortie de données soit un signal DCs5 qui correspond au signal DCs4, soit un signal DCs5 qui correspond au signal DCs4 après traitement par le second circuit de filtrage passe-bas C133.

Le signal numérique DCs5 constitue le signal de sortie des circuits de moyenne, filtrage et décimation 1112. Ce signal numérique DCs5 est ensuite traité par le convertisseur numérique-analogique de rapport cyclique 1113 qui réalise un traitement inverse à celui effectué par le convertisseur 1110 et qui fournit en sortie un signal analogique traité de retour d'excitation SSt.

Le signal analogique SSt est fourni directement à une première entrée du multiplexeur de sélection de sortie 112 et est fourni à une seconde entrée de celui-ci à travers un inverseur 1120. Le bit B6 du mot de programmation MP est appliqué à une entrée de sélection du multiplexeur 112 et détermine la sortie de celui-ci comme étant le signal SSt ou son complémentaire SSt/. Le multiplexeur 112 autorise en sortie une inversion du signal traité de manière à transmettre au final sur la liaison de communication 4 la forme d'onde attendue par l'unité de contrôle moteur 3.

Le circuit d'attaque 113 reçoit le signal SSt ou SSt/ délivré par le multiplexeur 112 et fournit un signal adapté pour attaquer l'électrode de grille du transistor 114. Le transistor 114 est monté en collecteur ouvert et transmet le signal traité de retour d'excitation vers l'unité de contrôle moteur 3 à travers la liaison de communication 4.

Le fonctionnement des circuits de moyenne, filtrage et décimation 1112 est précisé dans les paragraphes suivants.

A la Fig.3, il est montré un exemple de réalisation d'un circuit de moyenne C130 qui est adapté pour la présente invention. Dans cette figure, la référence « fe » correspond à signal d'échantillonnage de fréquence fe, les données d'entrée sont désignées X, les données de sortie sont désignées Y et l'indice « n » identifie une donnée concernée dans la succession temporelle des données.

Le circuit de moyenne C130 de la Fig.3 est un filtre numérique, connu de l'homme du métier, qui réalise une moyenne glissante suivant la formule de récurrence suivante :

$$Y_n = (1/2^2\ ).\ (1+X_{n-1} + X_{n-2} + X_{n-3}).$$

Parmi les circuits 1112, le circuit C130 a notamment pour fonction d'atténuer une partie du spectre de fréquence du signal CDss1, partie qui peut s'avérer perturbante pour le fonctionnement du circuit de décimation C132 placé en aval dans la chaîne de traitement.

Le circuit C130 a la particularité de conserver une grande bande passante pour le signal traité tout en autorisant une forte réjection de la fréquence d'horloge (Fc) et de la fréquence d'horloge divisée par 2 (Fc/2) du circuit de décimation C132.

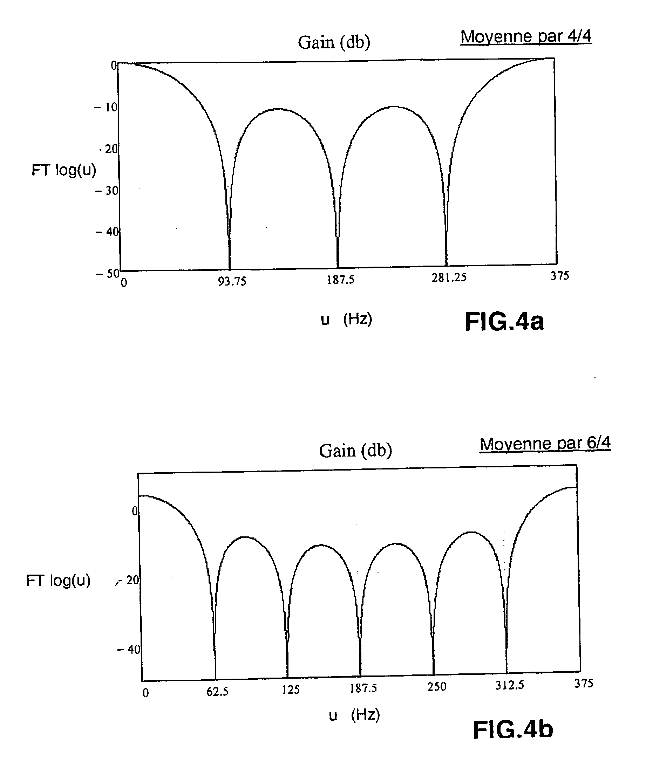

La Fig.4a montre un exemple de réponse spectrale obtenue pour le circuit de moyenne C130, avec la définition suivante, pour une moyenne de 4/4 :

- fe = 375 Hz
- M=3 cellules de retard (comme représentées à la Fig.3 par les blocs $Z^{-1}$)
- Fonction de transfert (transformée en z) :

$$FT(u) = \frac{\sum_{i=0}^{M} Z(u)^{-i}}{4} \qquad\qquad Z(u) = \exp(2\pi.i.u;\frac{1}{fe})$$

Conformément à l'exemple ci-dessus, la fréquence d'horloge Fc pour le circuit de décimation C132 sera avantageusement égale à 187,5 Hz. Une réjection à 93,75 Hz est obtenue (cf. Fig.4a).

La Fig.4b montre un autre exemple de réponse spectrale obtenue pour le circuit de moyenne C130, avec la définition suivante, pour une moyenne de 6/4 :

- fe = 375 Hz
- M=5 cellules de retard
- Même fonction de transfert que ci-dessus.

Conformément cet exemple, la fréquence d'horloge Fc pour le circuit de décimation C132 sera avantageusement égale à 125 Hz. Une réjection à 62,5 Hz est obtenue (cf. Fig.4b). Cette forme de réalisation offre un gain de 3,1 db en basse fréquence.

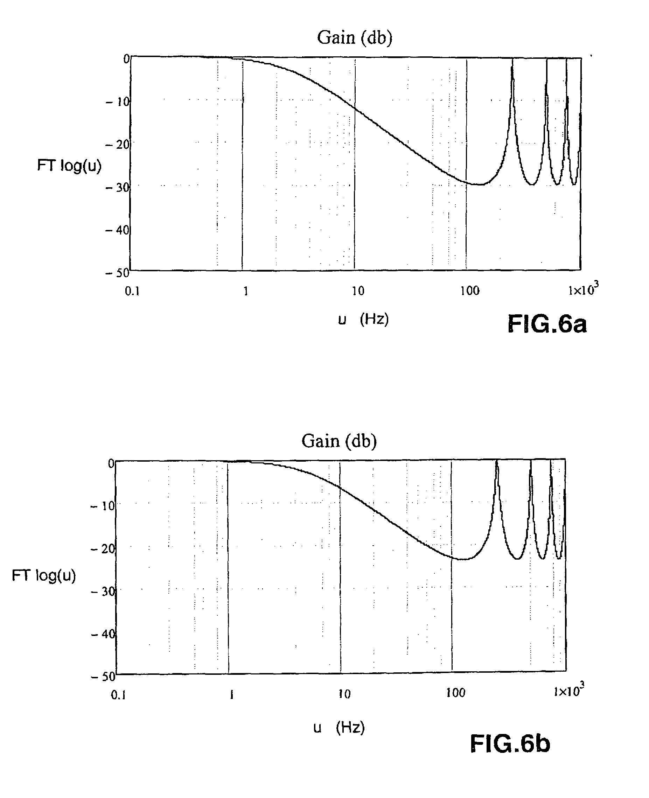

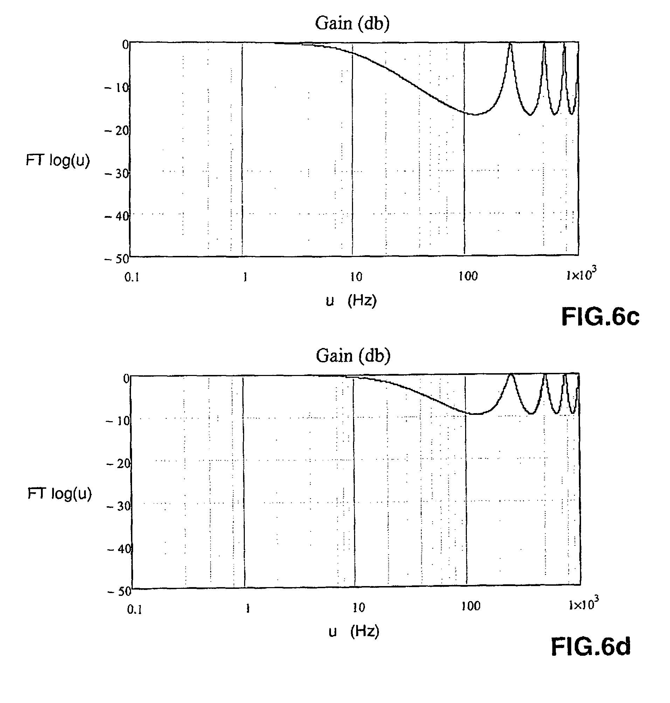

En référence plus particulièrement aux Figs. 5 et 6a à 6d, il est maintenant décrit la fonction de filtrage passe-bas effectuée par les circuits de filtrage C131 et C133.

La fonction de filtrage passe-bas est conçue de manière à limiter la bande passante du signal traité pour assurer une bonne compatibilité avec la bande passante de l'unité de contrôle moteur 3.

La fonction de transfert du filtrage implémenté est par exemple donnée par l'équation suivante :

$$FT(u) = \frac{a}{1-(1-a)z(u)^{-1}}$$

et, l'équation de récurrence devient :

$$Y_n = a(X_n + \frac{1}{a}Y_{n-1} - Y_{n-1})$$

X représentant la donnée d'entrée et Y la donnée de sortie.

La Fig.5 montre le schéma du filtre numérique obtenu à partir de l'égalité de récurrence ci-dessus.

Le tableau ci-dessous montre quatre exemples de filtrages effectués sur la base de l'équation de récurrence ci-dessus. Pour ces différents exemples, la fréquence d'échantillonnage choisie Fs est égale à 250 Hz. Les fréquences de coupure obtenues vont de 2,5 Hz à 28,7 Hz.

Les lignes 1 à 4 du tableau correspondent respectivement aux valeurs du coefficient « a » de $1/2^4=0,0625$, $1/2^3=0,125$, $1/2^2=0,25$ et $1/2=0,5$ et aux réponses spectrales montrées aux Figs.6a à 6d.

| $F_{-3dB}$ | Coeff (a) | Equation implémentée | Remarques |
|---|---|---|---|
| 2,5 Hz | 0,0625 | $Y_n = \frac{1}{2^4}(X_n + 2^4 Y_{n-1} - Y_{n-1})$ | $Fs$ = 250$Hz$, atténuation maxi = -29,83dB à 125Hz |
| 5,3Hz | 0,125 | $Y_n = \frac{1}{2^3}(X_n + 2^3 Y_{n-1} - Y_{n-1})$ | $Fs$ = 250$Hz$, atténuation maxi = -23,52dB à 125Hz |
| 11,5 Hz | 0,25 | $Y_n = \frac{1}{2^2}(X_n + 2^2 Y_{n-1} - Y_{n-1})$ | $Fs$ = 250$Hz$, attenuation maxi = -16,9dB à 125Hz |
| 28,7 Hz | 0,5 | $Y_n = \frac{1}{2}(X_n + 2^1 Y_{n-1} - Y_{n-1})$ | $Fs$ = 250$Hz$, atténuation maxi = -9,54dB à 125Hz |

Bien entendu, d'autres filtrages sont possibles et sont à la portée de l'homme du métier qui choisira le filtrage le plus adapté à l'application envisagée.

Concernant le circuit de décimation C132, celui-ci est introduit dans la chaîne de traitement lorsqu'un changement de fréquence (division de fréquence) est nécessaire dans le signal traité. En effet, l'unité de contrôle moteur 3 peut, dans certaines applications, exiger un signal de retour d'excitation ayant une fréquence inférieure à celle du signal réel. Le circuit C132 peut être réalisé de manière classique au moyen d'un compteur recevant un signal d'horloge de fréquence Fc.

De manière générale, les circuits de moyenne, filtrage et décimation 1112 sont programmés essentiellement selon des première et seconde configurations de fonctionnement permettant de répondre aux contraintes liées aux techniques de l'échantillonnage des signaux. Ces contraintes sont connues de l'homme du métier et ne seront pas détaillées ici.

Selon la première configuration des circuits 1112, il n'est pas effectué de division de fréquence dans le signal traité. Le signal est alors traité par le circuit de moyenne C130 et le circuit de filtrage passe-bas C131 et est ensuite délivré directement en sortie de la chaîne de traitement de signal pour être converti par le convertisseur 1113 en le signal analogique SSt. Les multiplexeurs MU130, MU131, MU132 et MU133 sont commandés respectivement par les bits B2, B3, B4 et B5 de telle manière que le signal ne bénéficie effectivement que du traitement des circuits C130 et C131.

Selon la seconde configuration des circuits 1112, il est effectué une division de fréquence dans le signal traité. Le signal est alors traité par le circuit de moyenne C130, le circuit de décimation C132 et le circuit de filtrage passe-bas C133 et est ensuite délivré directement en sortie de la chaîne de traitement de signal pour être converti par le convertisseur 1113 en le signal analogique SSt. Les multiplexeurs MU130, MU131, MU132 et MU133 sont commandés respectivement par les bits B2, B3, B4 et B5 de telle manière que le signal ne bénéficie effectivement que du traitement des circuits C130 et C132 et C133.

Bien entendu, d'autres configurations sont possibles et pourront être implémentées par l'homme du métier de manière à répondre aux besoins de certaines applications. On comprendra que l'invention ne se limite pas aux formes de réalisation particulières décrites ci-dessus et englobe toutes les variantes incluses dans la portée des revendications annexées.

**Revendications**

1. Régulateur de tension pour alternateur de véhicule automobile comprenant des circuits électroniques de régulation (10) aptes à produire un courant d'excitation (Sexc) destiné à une bobine d'excitation (EX) dudit alternateur (ALT), ledit courant d'excitation (Sexc) étant produit en fonction d'une différence entre une tension de consigne (SP) et une tension de sortie (+Vb) mesurée aux bornes d'une batterie électrique (BAT) dudit véhicule à laquelle est raccordé électriquement ledit alternateur (ALT), et des moyens pour produire un signal représentatif (SS ; Sp, SGp, Sexc) dudit courant d'excitation et transmettre celui-ci à une unité de commande électronique (3) dudit véhicule, **caractérisé en ce que** lesdits moyens pour produire et transmettre comprennent une interface programmable de traitement de signal (11) recevant en entrée une pluralité de signaux représentatifs (Sp, SGp, Sexc) dudit courant d'excitation, ladite interface (11) comportant des premiers moyens (110) pour sélectionner un signal représentatif (SS) dans ladite pluralité de signaux représentatifs (Sp, SGp, Sexc), des moyens (111) pour appliquer différents traitements sur le signal représentatif sélectionné (SS) et des seconds moyens (MU130 à MU133) pour sélectionner un traitement à appliquer audit signal représentatif sélectionné (SS), ledit signal représentatif sélectionné (SS) et ledit traitement à appliquer étant sélectionnés en fonction d'un mot de programmation (MP).

2. Régulateur selon la revendication 1, **caractérisé en ce que** ledit signal représentatif (SS ; Sp, SGp, Sexc) dudit courant d'excitation est un signal de type à modulation de largeur d'impulsion dit « PWM ».

3. Régulateur selon la revendication 1 ou 2, **caractérisé en ce que** lesdits moyens pour appliquer différents traitements comportent des moyens (1111) pour effectuer un traitement de limitation d'un rapport cyclique dudit signal représentatif traité et n'autoriser une variation dudit rapport cyclique qu'entre une valeur minimum prédéterminée (%DCmin) et une valeur maximum prédéterminée (%DCmax).

4. Régulateur selon l'une quelconque des revendications 1 à 3, **caractérisé en ce que** lesdits moyens pour appliquer différents traitements comportent des moyens (C130) pour effectuer un traitement de calcul de moyenne glissante sur ledit signal représentatif traité.

5. Régulateur selon l'une quelconque des revendications 1 à 4, **caractérisé en ce que** lesdits moyens pour appliquer différents traitements comportent des moyens (C131, C132) pour effectuer un traitement de filtrage passe-bas sur ledit signal représentatif traité.

6. Régulateur selon l'une quelconque des revendications 1 à 5, **caractérisé en ce que** lesdits moyens pour appliquer différents traitements comportent des moyens (C132) pour effectuer un traitement de changement de fréquence sur ledit signal représentatif traité.

7. Régulateur selon l'une quelconque des revendications 1 à 6, **caractérisé en ce que** ladite interface (11) est de type numérique et comporte un convertisseur analogique-numérique de rapport cyclique (1110) et un convertisseur numérique-analogique de rapport cyclique (1113) pour les conversions correspondantes dudit signal représentatif.

8. Alternateur pour véhicule automobile, **caractérisé en ce qu'**il comprend un régulateur (1) selon l'une quelconque des revendications 1 à 7.

9. Véhicule automobile **caractérisé en ce qu'**il comprend un alternateur (ALT) selon la revendication 8.

**Claims**

1. Voltage regulator for motor vehicle alternator comprising electronic regulating circuits (10) capable of producing an excitation current (Sexc) intended for an excitation coil (EX) of the said alternator (ALT), the said excitation current (Sexc) being produced as a function of a difference between a setpoint voltage (SP) and an output voltage (+Vb) measured at the terminals of an electric battery (BAT) of the said vehicle to which is electrically connected the said alternator (ALT), and means for producing a signal (SS; Sp, SGp, Sexc) representative of the said excitation current and transmitting the latter to an electronic control unit (3) of the said vehicle, **characterized in that** the said means for producing and transmitting comprise a programmable signal processing interface (11) receiving as an input a plurality of signals (Sp, SGp, Sexc) representative of the said excitation current, the said interface (11) comprising first means (110) for selecting a representative signal (SS) from the said plurality of representative signals (Sp, SGp, Sexc), means (111) for applying various processes to the selected representative signal (SS) and second means (MU130 to MU133) for selecting a process to be applied to the said selected representative signal (SS), the said selected representative signal (SS) and the said process to be applied being selected as a function of a programming word (MP).

2. Regulator according to Claim 1, **characterized in that** the said representative signal (SS; Sp, SGp, Sexc) of the said excitation current is a signal of the pulse width modulation "PWM" type.

3. Regulator according to Claim 1 or 2, **characterized in that** the said means for applying various processes comprise means (1111) for carrying out a process for limiting a duty cycle of the said processed representative signal and of authorizing a variation of the said duty cycle only between a predetermined minimum value (%DCmin) and a predetermined maximum value (%DCmax).

4. Regulator according to any one of Claims 1 to 3, **characterized in that** the said means for applying various processes comprise means (C130) for carrying out a process of computing a sliding average on the said processed representative signal.

5. Regulator according to any one of Claims 1 to 4, **characterized in that** the said means for applying various processes comprise means (C131, C132) for carrying out a low-pass filtering process on the said processed representative signal.

6. Regulator according to any one of Claims 1 to 5, **characterized in that** the said means for applying various processes comprise means (C132) for carrying out a change of frequency process on the said processed representative signal.

7. Regulator according to any one of Claims 1 to 6, **characterized in that** the said interface (11) is of the digital type and comprises a duty cycle analogue/digital converter (1110) and a duty cycle digital/analogue converter (1113) for the corresponding conversions of the said representative signal.

8. Alternator for a motor vehicle, **characterized in that** it comprises a regulator (1) according to any one of Claims 1 to 7.

9. Motor vehicle, **characterized in that** it comprises an alternator (ALT) according to Claim 8.

## Patentansprüche

1. Spannungsregulierer für einen Wechselstromgenerator eines Kraftfahrzeugs mit elektronischen Regulierungsschaltungen (10), die einen Erregungsstrom (Sexc) erzeugen können, der für eine Erregungsspule (EX) des Wechselstromgenerators (ALT) bestimmt ist, wobei der Erregungsstrom (Sexc) in Abhängigkeit von einer Differenz zwischen einer Sollspannung (SP) und einer Ausgangsspannung (+Vb) erzeugt wird, die an den Anschlussklemmen einer elektrischen Batterie (BAT) des Fahrzeugs gemessen wird, mit der der Wechselstromgenerator (ALT) elektrisch verbunden ist, und mit Mitteln zum Erzeugen eines repräsentativen Signals (SS; Sp, SGp, Sexc) des Erregungsstroms und zum Übertragen von diesem zu einer elektronischen Steuereinheit (3) des Fahrzeugs, **dadurch gekennzeichnet, dass** die Mittel zum Erzeugen und Übertragen eine programmierbare Signalverarbeitungsschnittstelle (11) umfassen, die am Eingang mehrere repräsentative Signale (Sp, SGp, Sexc) des Erregungsstroms empfängt, wobei die Schnittstelle (11) erste Mittel (110) zum Auswählen eines repräsentativen Signals (SS) aus den mehreren repräsentativen Signalen (Sp, SGp, Sexc), Mittel (111) zum Anwenden von verschiedenen Verarbeitungen auf das ausgewählte repräsentative Signal (SS) und zweite Mittel (MU130 bis MU133) zum Auswählen einer auf das ausgewählte repräsentative Signal (SS) anzuwendenden Verarbeitung umfasst, wobei das ausgewählte repräsentative Signal (SS) und die anzuwendende Verarbeitung in Abhängigkeit von einem Programmierwort (MP) ausgewählt werden.

2. Regulierer nach Anspruch 1, **dadurch gekennzeichnet, dass** das repräsentative Signal (SS; Sp, SGp, Sexc) des Erregungsstroms ein Signal vom sogenannten "PWM"-Typ, Impulsbreitenmodulationstyp, ist.

3. Regulierer nach Anspruch 1 oder 2, **dadurch gekennzeichnet, dass** die Mittel zum Anwenden von verschiedenen Verarbeitungen Mittel (1111) zum Durchführen einer Verarbeitung zum Begrenzen eines Tastverhältnisses des verarbeiteten repräsentativen Signals und zum Zulassen einer Veränderung des Tastverhältnisses nur zwischen einem vorbestimmten minimalen Wert (%DCmin) und einem vorbestimmten maximalen Wert (%DCmax) umfassen.

4. Regulierer nach einem der Ansprüche 1 bis 3, **dadurch gekennzeichnet, dass** die Mittel zum Anwenden von verschiedenen Verarbeitungen Mittel (C130) zum Durchführen einer Verarbeitung zum Berechnen eines gleitenden Mittelwerts an dem verarbeiteten repräsentativen Signal umfassen.

5. Regulierer nach einem der Ansprüche 1 bis 4, **dadurch gekennzeichnet, dass** die Mittel zum Anwenden von verschiedenen Verarbeitungen Mittel (C131, C132) zum Durchführen einer Tiefpassfilterverarbeitung an dem verarbeiteten repräsentativen Signal umfassen.

6. Regulierer nach einem der Ansprüche 1 bis 5, **dadurch gekennzeichnet, dass** die Mittel zum Anwenden von verschiedenen Verarbeitungen Mittel (C132) zum Durchführen einer Frequenzänderungsverarbeitung an dem verarbeiteten repräsentativen Signal umfassen.

7. Regulierer nach einem der Ansprüche 1 bis 6, **dadurch gekennzeichnet, dass** die Schnittstelle (11) vom digitalen Typ ist und einen Tastverhältnis-Analog-Digital-Umsetzer (1110) und einen Tastverhältnis-Digital-Analog-Umsetzer (1113) für die entsprechenden Umsetzungen des repräsentativen Signals umfasst.

8. Wechselstromgenerator für ein Kraftfahrzeug, **dadurch gekennzeichnet, dass** er einen Regulierer (1) nach einem der Ansprüche 1 bis 7 umfasst.

9. Kraftfahrzeug, **dadurch gekennzeichnet, dass** es einen Wechselstromgenerator (ALT) nach Anspruch 8 umfasst.

FIG.1

**FIG.2**

**FIG.3**

**FIG.5**

Gain (db)                    Moyenne par 4/4

FT log(u)

FIG.4a

u  (Hz)

Gain (db)                    Moyenne par 6/4

FT log(u)

FIG.4b

u  (Hz)

Gain (db)

FT log(u)

u  (Hz)

**FIG.6a**

Gain (db)

FT log(u)

u  (Hz)

**FIG.6b**

FIG.6c

FIG.6d

**EP 2 351 205 B1**

## RÉFÉRENCES CITÉES DANS LA DESCRIPTION

**Documents brevets cités dans la description**

- US 20080084190 A1